# EUROPÄISCHE PATENTSCHRIFT

(11) **EP 1 052 045 B1**
(45) Veröffentlichungstag und Bekanntmachung des Hinweises auf die Patenterteilung: **20.02.2002**
(21) Anmeldenummer: 00106155.5
(22) Anmeldetag: 21.03.2000
(51) Int. Cl.: B23B 31/16

(54) **Spannbacke und Spannfutter**
Clamping jaw and chuck
Mors de serrage et mandrin de serrage

(30) Priorität: 12.05.1999 DE 29908380 U
(43) Veröffentlichungstag der Anmeldung: 15.11.2000
(73) Patentinhaber: Schunk GmbH & Co. KG Fabrik für Spann- und Greifwerkzeuge, 74348 Lauffen (DE)
(72) Erfinder:
(74) Vertreter: Paul, Dieter-Alfred, Dipl.-Ing.

(56) Entgegenhaltungen:
- US-A- 5 015 003
- US-A- 5 735 534
- US-A- 5 842 704
- US-A- 5 899 464
- US-A- 5 979 914

## Beschreibung

Die vorliegende Erfindung betrifft ein Spannfutter nach dem Oberbegriff von Anspruch 1. Des weiteren betrifft die Erfindung eine Spannbacke nach dem Oberbegriff des Anspruchs 5.

Spannfutter zum Spannen von stangenförmigem Material dieser Art sind bekannt und werden in erster Linie an Drehmaschinen eingesetzt, um die zu bearbeitenden, stangenförmigen Werkstücke zu spannen. Die herkömmlichen Spannfutter bestehen dabei aus einem formsteifen Futterkörper, der eine zentrale Aufnahmeöffnung für die Werkstücke aufweist, sowie aus mehreren Spannbacken, die in Führungsnuten des Futterkörpers radial bewegbar sind. Neben manuell betätigbaren Handspannfuttern werden in komplexeren Werkzeugmaschinen, insbesondere in programmgesteuerten Drehautomaten, häufig sogenannte Kraftspannfutter eingesetzt, bei denen die von den Spannbacken auf das Werkstück ausgeübten Spannkräfte motorisch oder hydraulisch erzeugt werden.

Aus der US-Patentschrift 5,842,704 ist eine Spannbacke der eingangs genannten Art bekannt. Diese Spannbacke besitzt eine Grundbacke und eine L-förmige Aufsatzbacke, wobei an der nach außen gerichteten Stirnfläche der Aufsatzbacke ein Vorsprung in Form eines Zapfens ausgebildet ist, der in eine Bohrung der Grundbacke eingreift, um ein Abheben der Aufsatzbacke von der Grundbacke zu verhindern.

In der US-Patentschrift 5,735,534 ist eine sehr ähnliche Spannbacke offenbart, wobei hier durch einen an der Grundbacke vorgesehenen Steg, der in eine entsprechende Vertiefung der Aufsatzbacke eingreift, verhindert wird, daß sich die Aufsatzbacke von der Grundbacke löst.

Ein Problem bei diesen Spannbacken besteht darin, daß auf den bolzen- bzw. stegförmigen Vorsprung im Betrieb hohe Scherkräfte wirken. Ein weiteres Problem besteht darin, daß sich bei den bekannten Spannbacken ein gewisses Spiel in Futterachsrichtung zwischen Aufsatzbacke und Grundbakke nicht vermeiden läßt.

Aufgabe der vorliegenden Erfindung ist es daher, ein Spannfutter der eingangs genannten Art und eine Grundbakke hierfür so auszubilden, daß sich die Aufsatzbacken im Betrieb nicht von der Grundbacke lösen kann.

Diese Aufgabe ist bei einem Spannfutter der eingangs Art durch die kennzeichnenden Merkmale von Anspruch 1, und bei einer Spannbacke der eingangs genannten Art durch die kennzeichnenden Merkmale von Anspruch 5 gelöst.

Diese Ausführungsform mit Vorsprüngen bzw. Verzahnungen gewährleistet, daß die Aufsatzbacken beim Bearbeiten der Werkstücke nicht von den Grundbacken abgezogen werden können.

Im übrigen kann die Aufsatzbacke an der Grundbacke befestigt sein, indem die Aufsatzbacke mit der Grundbacke über einen in einer T-Nut der Grundbacke vorgesehenen Nutenstein verschraubt bzw. verspannt wird.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: ein Spannfutter gemäß der vorliegenden Erfindung in perspektivischer Ansicht,
- Figur 2: eine Spannbacke des Spannfutters aus Figur 1 im Längsschnitt,
- Figur 3: die Einzelheit X aus Figur 2 in vergrößerter Darstellung,
- Figur 4: die Grundbacke der Spannbacke aus Figur 2 von der Spannfutterinnenseite her betrachtet,
- Figur 5: die Aufsatzbacke der Spannbacke aus Figur 2 von der Futteraußenseite her betrachtet und
- Figur 6: die Spannbacke aus Figur 2 in perspektivischer Explosionsansicht.

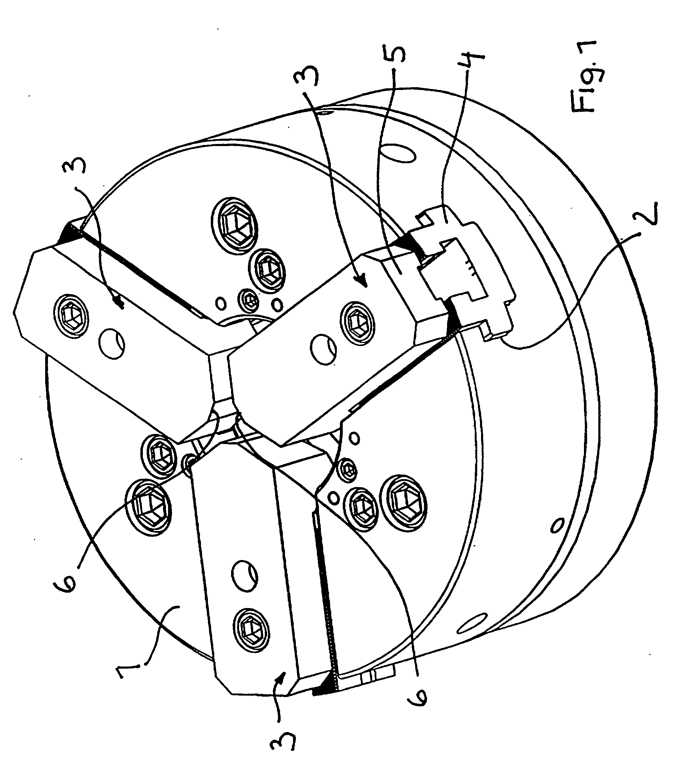

In Figur 1 ist eine Ausführungsform eines erfindungsgemäßen Spannfutters dargestellt wie es zum Spannen von insbesondere stangenförmigem Material an Drehmaschinen verwendet wird. Zu dem Spannfutter, das als Dreibackenfutter ausgebildet ist, gehört ein Futterkörper 1, der eine zylindrische Grundform besitzt und an der nicht dargestellten Spindel der Drehmaschine mit Schrauben befestigt werden kann. An der einen Stirnseite des Futterkörpers 1 sind drei radiale Führungsnuten 2 vorgesehen, die gleichmäßig über den Umfang verteilt, d.h. mit jeweils 120° Versatz gegeneinander angeordnet sind. In die Führungsnuten 2 sind Spannbacken 3 eingesetzt, die durch einen geeigneten Antrieb zum Spannen und Lösen von Werkstücken gemeinsam nach innen oder außen verstellt werden können.

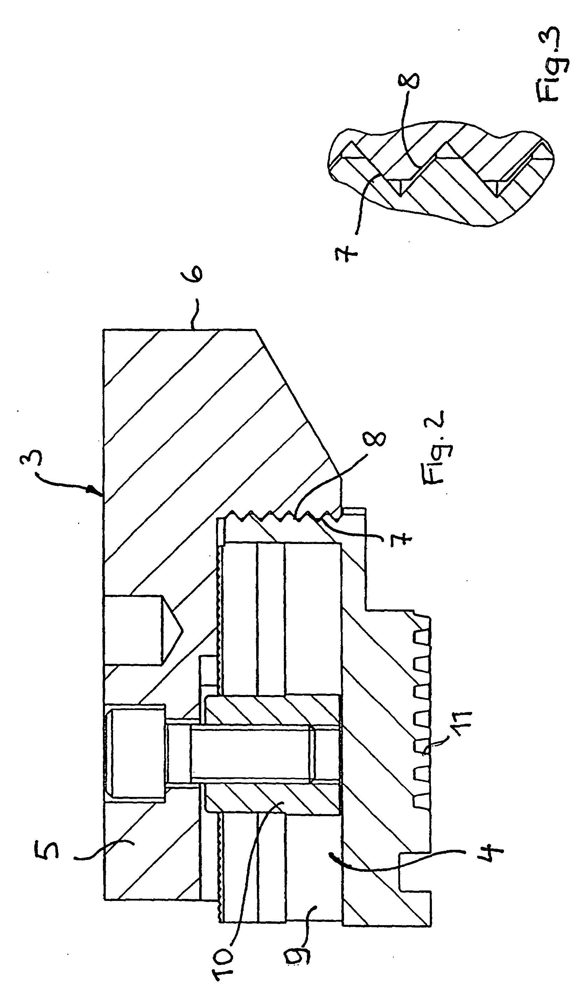

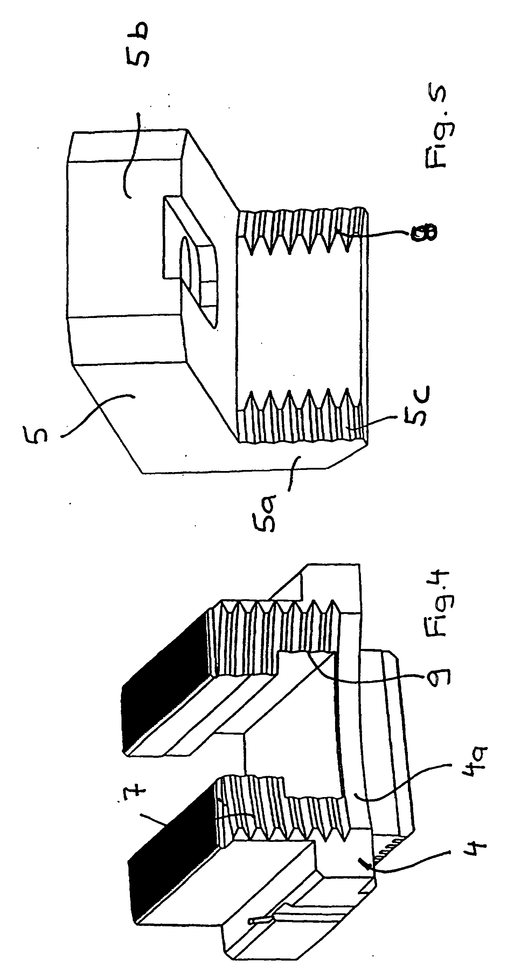

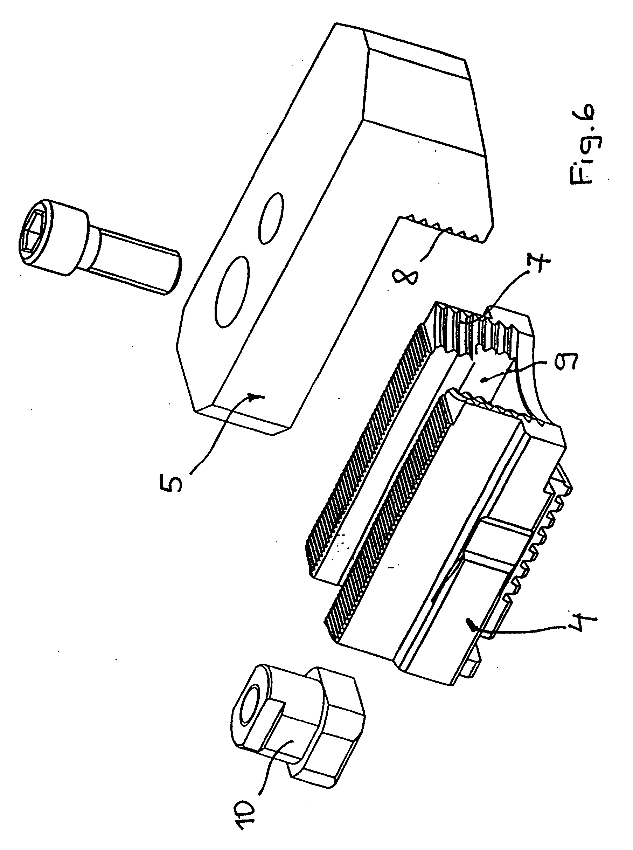

Der Aufbau der Spannbacken 3 ist im einzelnen in den Figuren 2 bis 6 dargestellt. Danach besitzt jede Spannbacke 3 eine Grundbacke 4, die in eine Führungsnut 2 des Futterkörpers 1 eingesetzt und darin radial verstellbar geführt ist. An ihrer Unterseite besitzt die Grundbacke 4 eine Verzahnung 11, über die sie mit dem vorgenannten Antrieb, der beispielsweise als Keilstangenmechanismus ausgebildet sein kann, gekoppelt ist. Die Aufsatzbacke 5 besitzt eine im wesentlichen L-förmige Grundform, wobei der eine Schenkel 5a an der radial nach innen weisenden Stirnfläche 4a der Grundbacke anliegt und der andere Schenkel 5b auf der Oberseite der Grundbacke 4 aufliegt. Wie im einzelnen in den Figuren 4 und 5 besonders gut erkennbar ist, sind an der Stirnfläche 4a der Grundbacke 4 und der darin in Anlage kommenden Fläche der Aufsatzbacke 5 Verzahnungen 7, 8 vorgesehen, die miteinander in Eingriff stehen bzw. bringbar sind, um sicherzustellen, daß sich die Aufsatzbacke 5 im Betrieb nicht von der Grundbacke 4 lösen kann. Wie die Figur 3 besonders gut zeigt, besitzen die beiden Verzahnungen 7, 8 in Futterachsrichtung A einen geringen Versatz derart, daß die Unterseiten der Zähne der Grundbacke 4 an den Oberseiten der Zähne der Aufsatzbacke 5 fest anliegen, so daß sich beim Spannen ein Niederzugeffekt ergibt, der die Aufsatzbacke 5 fest mit der Grundbacke 4 verbindet. Um hierbei eine gute Positionierung der Aufsatzbacke 5 an der Grundbacke 4 zu erzielen, sind die verzahnten Kontaktflächen 4a, 5c an Grundbacke 4 und Aufsatzbacke 5 in komplementärer Weise gewölbt ausgebildet.

Zur Befestigung der Aufsatzbacke 5 an der Grundbacke 4 ist in einer radial gerichteten T-Nut 9 der Grundbacke 4 ein T-Nutenstein 10 angeordnet, über den die Aufsatzbacke 5 mit der Grundbacke 4 verschraubt ist.*

## Patentansprüche

1. Spannfutter zum Spannen von insbesondere stangenförmigem Material mit einem Futterkörper (1) und mehreren in Führungsnuten (2) des Futterkörpers (1) eingesetzten Spannbacken (3), die durch einen Antrieb radial zur Futterachse (A) verstellbar sind und jeweils eine angetriebene Grundbacke (4) und eine daran lösbar fixierte und an ihrer Innenseite eine Spannfläche (6) aufweisende Aufsatzbacke (5) mit einer L-förmigen Grundform aufweisen, wobei der eine, die Spannfläche aufweisende Schenkel (5a) an der radial nach innen weisenden Stirnfläche (4a) der Grundbacke (4) anliegt und der andere Schenkel (5b) auf die Grundbacke (4) aufgesetzt und an dieser fixiert ist, und wobei an der nach innen gerichteten Stirnfläche (4a) der Grundbacke (4) und der daran in Anlage kommenden Fläche der Aufsatzbacke (5) miteinander in Eingriff stehende oder bringbare Vorsprünge (7, 8) vorgesehen sind, die ein Abheben der Aufsatzbacke (5) von der Grundbacke (4) verhindern, **dadurch gekennzeichnet, daß** die Vorsprünge in Form von Verzahnungen (7, 8) an der Grundbacke (4) und der Aufsatzbacke (5) ausgebildet sind.

2. Spannfutter nach Anspruch 1, **dadurch gekennzeichnet, daß** die Verzahnungen (7, 8) an Grundbacke (4) und zugehöriger Aufsatzbacke (5) in Futterachsrichtung (A) derart versetzt zueinander sind, daß sich ein Niederzugeffekt ergibt, der die Aufsatzbacke (5) fest mit der Grundbacke (4) verbindet.

3. Spannfutter nach Anspruch 1 oder 2, **dadurch gekennzeichnet, daß** die nach innen gerichtete Stirnfläche (4a) der Grundbacke (4) und die daran in Anlage kommende Fläche der Aufsatzbacke (5) gewölbt ausgebildet sind.

4. Spannfutter nach einem der vorherigen Ansprüche, **dadurch gekennzeichnet, daß** in einer T-Nut (9) der Grundbacke (4) ein Nutenstein (10) angeordnet ist, über den die Aufsatzbacke (5) mit der Grundbacke (4) verschraubt ist.

5. Spannbacke für ein Spannfutter zum Spannen von insbesondere stangenförmigem Material mit einer Grundbacke (4) und einer daran lösbar fixierten und an ihrer einen Stirnfläche eine Spannfläche (6) aufweisenden Aufsatzbacke mit einer L-förmigen Grundform, wobei der eine, die Spannfläche (6) aufweisende Schenkel (5a) an einer Stirnfläche (4a) der Grundbacke (4) anliegt und der andere Schenkel (5b) auf die Grundbacke (4) aufgesetzt und an dieser fixiert ist, und wobei an der Stirnfläche (4a) der Grundbacke (4) und der daran in Anlage kommenden Fläche der Aufsatzbacke (5) miteinander in Eingriff stehende oder bringbare Vorsprünge (7, 8) vorgesehen sind, die ein Abheben der Aufsatzbacke (5) von der Grundbacke (4) verhindern, **dadurch gekennzeichnet, daß** die Vorsprünge in Form von Verzahnungen (7, 8) an der Grundbacke (4) und der Aufsatzbacke (5) ausgebildet sind.

6. Spannbacke nach Anspruch 5, **dadurch gekennzeichnet, daß** die Stirnfläche (4a) der Grundbacke (4) und die daran in Anlage kommende Fläche der Aufsatzbacke (5) gewölbt ausgebildet sind.

## Claims

1. Clamping chuck for clamping material, especially for clamping rod shaped material, having a chuck body (1), and, inserted in guide grooves (2) of the chuck body (1), a plurality of clamping jaws (3) which are movable by drive means radially with respect to the chuck axis (A) and which each have a driven base jaw (4) and a top jaw (5) of L-shaped basic shape which is releasably fixed to the latter and which at its inner surface has a clamping surface (6), the limb (5a) that has the clamping surface abutting against the radially inwardly pointing end surface (4a) of the base jaw (4), and the other limb (5b) being mounted on and fixed to the base jaw (4), and projections (7, 8) that are interengaged or can be brought into interengagement being provided on the inwardly directed end surface (4a) of the base jaw (4) and on the surface of the top jaw (5) which comes into abutment with the latter and which prevent the top jaw (5) from being lifted off from the base jaw (4), **characterised in that** the projections are constructed in the shape of toothing (7, 8) on the base jaw (4) and on the top jaw (5).

2. Clamping chuck according to claim 1, **characterised in that** the toothing (7,8) on the base jaw (4) and on the associated top jaw (5) are offset with respect to each other in the chuck axis direction (A) such that a pull down effect is achieved which connects the top jaw (5) fast with the base jaw (4).

3. Clamping chuck according to claim 1 or 2, **characterised in that** the inwardly directed end surface (4a) of the base jaw (4) and the surface of the top jaw (5) that comes into abutment with it are made curved.

4. Clamping chuck according to one of the preceding claims, **characterised in that** an inserted sliding block (10) is arranged in a T-slot (9) of the base jaw (4) by means of which the top jaw (5) is screw connected to the base jaw (4).

5. Clamping jaw for a clamping chuck for clamping material, especially for clamping rod shaped material, having a base jaw (4) and a top jaw of L-shaped basic shape which is releasably fixed to the latter and which at its one end face has a clamping surface (6), the one limb (5a) that has the clamping surface (6) abutting against an end surface (4a) of the base jaw (4), and the other limb (5b) being mounted on and fixed to the base jaw (4), and projections (7, 8) that are interengaged or can be brought into interengagement being provided on the end surface (4a) of the base jaw (4) and on the surface of the top jaw (5) which comes into abutment with the latter and which prevent the top jaw (5) from being lifted off from the base jaw (4), **characterised in that** the projections are constructed in the shape of toothing (7, 8) on the base jaw (4) and on the top jaw (5).

6. Clamping jaw according to claim 5, **characterised in that** the end surface (4a) of the base jaw (4) and the surface of the top jaw (5) that comes into abutment with it are made curved.

## Revendications

1. Mandrin de serrage pour serrer des pièces notamment en forme de barre, comprenant un corps de mandrin (1) et plusieurs mors (3) logés dans des rainures de guidage (2) du corps du mandrin (1), qui sont réglables radialement par rapport à l'axe du mandrin (A) à l'aide d'un dispositif d'entraînement et qui présentent chacun un mors de base mobile (4) et un mors rapporté (5) en forme de L qui est fixé de façon amovible au précédent et présente sur sa face intérieure une surface de serrage (6), sachant que l'une des ailes (5a) présentant la surface de serrage est appliquée contre la surface frontale (4a) du mors de base (4) pointant radialement vers l'intérieur et que l'autre aile (5b) est posée sur le mors de base (4) et y est fixée, sachant également que sur la surface frontale (4a) du mors de base (4) qui est dirigée vers l'intérieur et sur la surface du mors rapporté (5) venant s'appliquer contre la précédente sont prévues des saillies (7, 8) mises en prise ou pouvant être mises en prise les unes avec les autres, qui empêchent le mors rapporté (5) de se soulever du mors de base (4), **caractérisé en ce que** les saillies du mors de base (4) et du mors rapporté (5) sont réalisées sous forme de dentures (7, 8).

2. Mandrin de serrage selon la revendication 1, **caractérisé en ce que** les dentures (7, 8) du mors de base (4) et du mors rapporté (5) associé au précédent sont décalées les unes par rapport aux autres dans la direction de l'axe du mandrin (A) de telle sorte qu'il se crée un effet de traction vers le bas qui relie solidement le mors rapporté (5) au mors de base (4).

3. Mandrin de serrage selon la revendication 1 ou 2, **caractérisé en ce que** la surface frontale (4a) du mors de base (4) qui est dirigée vers l'intérieur et la surface du mors rapporté (5) qui vient s'y appliquer sont réalisées de façon bombée.

4. Mandrin de serrage selon l'une des revendications précédentes, **caractérisé en ce qu'**un coulisseau (10) est placé dans une rainure en T (9) du mors de base (4), par le biais duquel le mors rapporté (5) est vissé au mors de base (4).

5. Mors pour un mandrin de serrage destiné à serrer notamment des pièces en forme de barre, comprenant un mors de base (4) et un mors rapporté en forme de L qui est fixé de façon amovible au précédent et présente sur l'une de ses faces intérieures une surface de serrage (6), sachant que l'une des ailes (5a) présentant la surface de serrage (6) est appliquée contre une surface frontale (4a) du mors de base (4) et que l'autre aile (5b) est posée sur le mors de base (4) et y est fixée, sachant également que sur la surface frontale (4a) du mors de base (4) et sur la surface du mors rapporté (5) venant s'appliquer contre la précédente sont prévues des saillies (7, 8) mises en prise ou pouvant être mises en prise les unes avec les autres, qui empêchent le mors rapporté (5) de se soulever du mors de base (4), **caractérisé en ce que** les saillies du mors de base (4) et du mors rapporté (5) sont réalisées en forme de dents (7, 8).

6. Mors selon la revendication 5, **caractérisé en ce que** la surface frontale (4a) du mors de base (4) et la surface du mors rapporté (5) qui vient s'y appliquer sont réalisées de façon bombée.
